# EUROPÄISCHE PATENTANMELDUNG

(11) **EP 2 907 371 A1**
(43) Veröffentlichungstag der Anmeldung: **19.08.2015**
(21) Anmeldenummer: 15401001.1
(22) Anmeldetag: 06.02.2015
(51) Int. Cl.: A01C 21/00, A01C 17/00

(54) **Streuvorrichtung und Verfahren zum Einstellen einer Querverteilung eines durch die Streuvorrichtung ausgebrachten Massenstroms**

(30) Priorität: 14.02.2014 DE 102014101879
(71) Anmelder: Amazonen-Werke H. Dreyer GmbH & Co. KG, 49205 Hasbergen (DE)
(72) Erfinder:

(57) **Zusammenfassung**

Die Erfindung stellt in verschiedenen Aspekten eine Streuvorrichtung mit Streuscheibe (3) und ein Verfahren zum Einstellen einer Querverteilung eines durch eine Streuvorrichtung ausgebrachten Massenstroms bereit, wobei die Streuscheibe (3) als eine das Streubild beeinflussende Größe in einer automatischen Steuerung der Streuvorrichtung zur Einstellung einer gewünschten Querverteilung berücksichtigt wird. In beispielhaften Ausführungsformen wird wenigstens ein geometrischer und/oder physikalischer Streuscheibenparameter in eine elektrische Steuervorrichtung (15) der Streuvorrichtung eingegeben und die Streuvorrichtung in Abhängigkeit von dem eingegebenen Streuscheibenparameter automatisch gesteuert, um eine gewünschte Querverteilung festzulegen

## Beschreibung

Die vorliegende Erfindung betrifft eine Streuvorrichtung und ein Verfahren zum Einstellen einer Querverteilung eines durch die Streuvorrichtung ausgebrachten Massenstroms. Die vorliegende Erfindung betrifft insbesondere eine automatische Steuerung einer Streuvorrichtung zum Einstellen der Querverteilung.

In der Landwirtschaft werden sehr große Mengen Mineraldünger ausgebracht, um das Nährstoffangebot für Kulturpflanzen zu ergänzen. Durch gezielte Düngergaben können für Kulturpflanzen schnelleres Wachstum, höhere Erträge und verbesserte Qualität erzielt werden, da die benötigten Grundnährstoffe und Spurennährstoffe oftmals im kultivierten Boden nicht in erwünschter Form und Menge bereitstehen. Gerade um einem zunehmenden Bedarf von Nahrungsmitteln zu begegnen werden im Agrarbereich Düngemittel eingesetzt, so dass die erforderlichen Steigerungen von Erntemengen erreicht werden. Der optimale Einsatz von Düngemitteln ist jedoch nicht nur hinsichtlich der mit Düngemitteln verbundenen Kosten wichtig, sondern auch angesichts der möglichen Gefahren von Belastungen für die Bodenfauna und das Grundwasser bei falscher Düngung notwendig. Zur wirksamen Ertragssteigerung ist es daher unumgänglich, die meist kostenintensiven Düngemittel so zu verteilen, dass sie von den Pflanzen optimal genutzt werden können, ohne eine Gefahr für die Umwelt darzustellen.

Für die Ausbringung der Mineraldünger sind im Laufe der Zeit die verschiedenartigsten Verteiltechniken entwickelt worden. Hierbei haben sich insbesondere die Zentrifugaldüngerstreuer durchgesetzt. In entsprechenden bekannten Streuvorrichtungen wird ein dosierter Massenstrom einer rotierenden Streuscheibe zugeführt, die den dosierten Massenstrom mittels an der Streuscheibe angebrachter Streuschaufeln verteilt ausbringt.

Es ist deshalb neben einer genauen Kenntnis der ausgebrachten Menge an Düngemittel wichtig, eine möglichst zielgenaue und gleichmäßige Verteilung von Düngemitteln während eines Streuvorgangs zu erreichen. Eine möglichst genaue Einstellung der Streuniere, d.h. die Fläche, die von dem ausgebrachten Düngemittel bedeckt wird, und des Streuprofils stellt daher einen Gegenstand intensiver Entwicklungsbemühungen dar.

In der Druckschrift DE 197 23 359 A1 ist ein Schleuderstreuer beschrieben, der einen nahe dem Umfang einer Streuscheibe angeordneten Sensor aufweist, mittels dessen der aktuelle Abwurfbereich, die Massenverteilung im Abwurfbereich und die absolute Masse als Istwerte erfasst werden. Es wird vorgeschlagen, die Lage und Ausdehnung des Streuringsektors aus einem Flugverhalten zu ermitteln, das aus den erfassten Werten und der Größe einer Dosieröffnung bestimmt wird, mittels welcher der Streuscheibe ein Massenstrom zugeführt wird. Anhand von Abweichungen der erfassten Istwerte von entsprechenden Sollwerten soll der Schleuderstreuer selbstregelnd betrieben werden.

Es hat sich herausgestellt, dass eine Einstellung eines Streubilds, insbesondere der Streuniere und des Streuprofils, in bekannten Schleuderstreuern durch eine automatische Steuerung nicht mit ausreichender Genauigkeit erreicht wird. Wie vorangehend dargestellt ist, angesichts der Gefahren von Überdüngung und der Wirtschaftlichkeit wegen kostenintensiver Düngemittel, eine möglichst genaue Einstellung der Streuniere und des Streuprofils wünschenswert, wobei im Zuge einer Automatisierung eine verbesserte Bedienerfreundlichkeit und Optimierung zu erreichen ist.

Die Erfindung stellt in verschiedenen Aspekten eine Streuvorrichtung mit Streuscheibe und ein Verfahren zum Einstellen einer Querverteilung eines durch eine Streuvorrichtung ausgebrachten Massenstroms bereit. Dabei wird die Streuscheibe als eine das Streubild beeinflussende Größe in einer automatischen Steuerung der Streuvorrichtung zur Einstellung einer gewünschten Querverteilung berücksichtigt.

In einem Aspekt der Erfindung wird ein Verfahren zum Einstellen einer Querverteilung eines durch eine Streuvorrichtung mittels einer Streuscheibe ausgebrachten Massenstroms bereitgestellt. In beispielhaften Ausführungsformen umfasst das Verfahren ein Eingeben von wenigstens einem geometrischen und/oder physikalischen Streuscheibenparameter in eine elektronische Steuervorrichtung der Streuvorrichtung und ein automatisches Steuern der Streuvorrichtung in Abhängigkeit von dem eingegebenen Streuscheibenparameter, um eine gewünschte Querverteilung festzulegen. Auf diese Weise wird eine automatische Steuerung bereitgestellt, die eine Einstellung einer gewünschten Querverteilung zu einem hohen Grad an Genauigkeit erlaubt, ohne dass sehr aufwendige Berechnungen und Messungen erforderlich sind.

In einer vorteilhafteren Ausführungsform kann das automatische Steuern der Streuvorrichtung ein automatisches Bestimmen eines Steuerparameters auf Grundlage des eingegebenen Streuscheibenparameters und ein Steuern der Streuvorrichtung in Abhängigkeit von dem Steuerparameter umfassen. Dabei wird auf einfache Weise sichergestellt, dass eine streuscheibenabhängige Steuerung erfolgt.

In einer weiteren vorteilhafteren Ausgestaltung hierin kann der Steuerparameter aus dem Streuscheibenparameter auf Grundlage von wenigstens einer in einem elektronischen Speicher hinterlegten Beziehung bestimmt werden. Auf diese Weise wird eine einfache Bestimmung eines Steuerparameters auf Grundlage des Streuscheibenparameters bereitgestellt.

In einer weiteren vorteilhafteren Ausgestaltung hierin kann die wenigstens eine hinterlegte Beziehung wenigstens eine Einstelltabelle und/oder wenigstens eine Rechenformel, die den wenigstens einen eingegebenen Streuscheibenparameter mit dem wenigstens einen Steuerparameter in Beziehung setzt, und/oder wenigstens eine Kennlinie umfassen. Hierdurch werden vorteilhafte Ausgestaltungen der hinterlegten Beziehungen bereitgestellt.

In einer weiteren vorteilhafteren Ausgestaltung hierin kann eine Mehrzahl von Beziehungen hinterlegt sein, wobei eine davon in Abhängigkeit von dem eingegebenen Streuscheibenparameter für die Bestimmung des Steuerparameters automatisch ausgewählt wird. Auf diese Weise kann ein automatisches Bestimmen des Steuerparameters auf Grundlage des Streuscheibenparameters auf einfache Weise erfolgen.

In einer weiteren vorteilhafteren Ausführungsform kann das Verfahren ferner ein Durchführen von Messungen während eines Streuvorgangs mittels einer Sensorvorrichtung zum Erfassen von wenigstens einem Streuparameter umfassen, wobei das automatische Steuern der Streuvorrichtung während des Streuvorgangs ein automatisches Einstellen der Querverteilung in Abhängigkeit von dem wenigstens einen Streuparameter umfasst. Durch diese Weise kann eine einfache Steuerung und Einstellung einer gewünschten Querverteilung während eines Streuvorgangs auf Grundlage des Streuscheibenparameters und gemessener Streuparameter erfolgen.

In einer vorteilhafteren Ausgestaltung hierin kann das Verfahren ferner ein Ermitteln einer Querverteilung des ausgebrachten Massenstroms anhand des wenigstens einen Streuparameters und ein Ermitteln einer korrigierten Querverteilung in Abhängigkeit von dem wenigstens einen eingegebenen Streuscheibenparameter umfassen. Auf diese Weise wird die ausgebrachte Querverteilung unter Berücksichtigung der Streuscheibe zu sehr großer Genauigkeit ermittelt.

In einer weiteren vorteilhafteren Ausführungsform der Erfindung kann das automatische Steuern der Streuvorrichtung ein Einstellen eines der Streuscheibe zugeführten Massenstroms und/oder einer Drehzahl der Streuscheibe und/oder ein Verstellen einer Streuschaufel und/oder ein Verstellen einer Aufbringposition des zugeführten Massenstroms auf die Streuscheibe und/oder ein Verstellen einer Zufuhrrichtung des zugeführten Massenstroms zur Streuscheibe umfassen.

In einer weiteren vorteilhafteren Ausführungsform kann der wenigstens eine eingegebene Streuscheibenparameter einen Scheibendurchmesser und/oder eine Streuschaufellänge und/oder ein Trägheitsmoment der Streuscheibe und/oder eine Schaufelposition auf der Streuscheibe und/oder eine Schaufelorientierung auf der Streuscheibe umfassen.

In einem anderen Aspekt der Erfindung wird eine Streuvorrichtung mit einer Streuscheibe und einer elektronischen Steuervorrichtung bereitgestellt, die zur Durchführung des Verfahrens gemäß dem oben dargestellten Aspekt der Erfindung konfiguriert ist. Auf diese Weise wird eine Streuvorrichtung mit automatischer Steuerung bereitgestellt, die eine Einstellung einer gewünschten Querverteilung zu einem hohen Grad an Genauigkeit erlaubt, ohne dass sehr aufwendige Berechnungen und Messungen erforderlich sind.

Weitere Merkmale, vorteilhafte Ausführungsformen und Vorteile der vorliegenden Erfindung gehen aus den beigefügten Patentansprüchen und der folgenden detaillierten Beschreibung anschaulicher Ausführungsformen hervor, wobei auf die folgenden Figuren Bezug genommen wird.
- Fig. 1: zeigt schematisch eine Messanordnung mit unterschiedlich konfigurierter Streuscheibe und Sensoranordnung zur Erfassung einer Streuverteilung; und
- Fig. 2: zeigt schematisch eine Streuvorrichtung gemäß einer beispielhaften Ausführungsform der Erfindung.

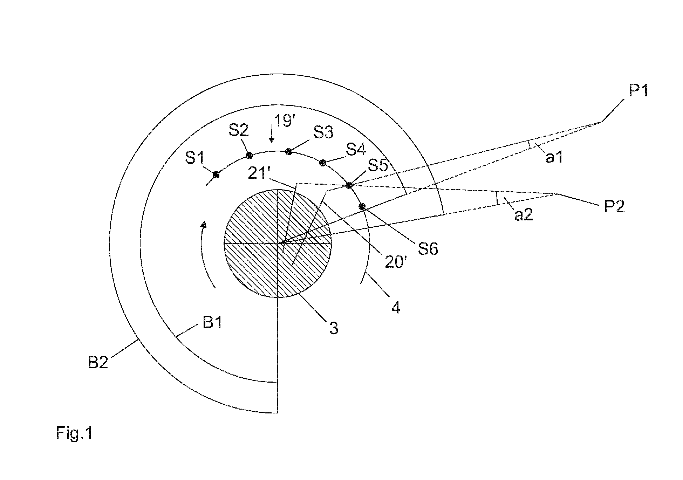

Mit Bezug auf Fig. 1 ist schematisch eine Messanordnung mit unterschiedlich konfigurierter Streuscheibe 3 und einer Sensoranordnung 19' zur Erfassung einer Streuverteilung dargestellt. In einer ersten Konfiguration der Streuscheibe 3 ist darauf eine Streuschaufel 20' angeordnet. In einer zweiten Konfiguration der Streuscheibe 3 ist auf der Streuscheibe 3 eine Streuschaufel 21' angeordnet. Fig. 1 zeigt schematisch die erste und zweite Konfiguration der Streuscheibe 3 in einer simultanen Darstellung, wobei gleichzeitig die Streuschaufel 20' und die Streuschaufel 21' auf der Streuscheibe 3 dargestellt sind.

Die Sensoranordnung 19' wird durch eine Mehrzahl von Sensoren S1, S2, S3, S4, S5 und S6 bereitgestellt, die entlang einer Umfangsrichtung U der Streuscheibe 3 über einen Umfangsbereich angeordnet sind. Alternativ kann eine Messung auch durch einen entlang der Umfangsrichtung positionierbaren Sensor durchgeführt werden, der bspw. an Positionen, die den Bezugszeichen S1, S2, S3, S4, S5 und S6 entsprechen, Messungen durchführt. Mit der Sensoranordnung 19' wird ein Streuprofil von einem durch die Streuscheibe 3 ausgebrachten Massenstrom und ein Abwurfwinkelbereich erfasst, in dem ein auszubringender Massenstrom von der Streuscheibe 3 abgeworfen wird.

Für die Streuscheibe 3 in der ersten Konfiguration, d.h. mit Streuschaufel 20', ist ein Abwurfwinkelbereich schematisch durch einen Kreisbogen B1 dargestellt. Ein Abwurfwinkelbereich zu der Streuscheibe 3 in der zweiten Konfiguration, d.h. mit Streuschaufel 21', ist schematisch durch einen Kreisbogen B2 dargestellt.

Die Erfinder haben anhand der Messung erkannt, dass die Sensoranordnung 19', und dementsprechend ähnliche Sensoranordnungen, nicht den Winkel erfassen, unter dem ein von der Streuscheibe abgeworfenes Partikel mit dem Sensor wechselwirkt. Dies wird im Folgenden anhand von Fig. 1 näher beschrieben.

Beispielhaft wird ein von den Schaufeln 20' und 21' für unterschiedliche Streuscheiben 3 abgeworfenes Partikel betrachtet, dass von Sensor S5 erfasst wird. Wie aus Fig. 1 ersichtlich, erfasst der Sensor S5 zwar jeweils das von den Streuscheiben 3 von erster und zweiter Konfiguration abgeworfenes Partikel, jedoch nicht einen Winkel, unter dem das Partikel am Sensor S5 vorbei fliegt, und damit nicht die Flugbahn des Partikels. In Fig. 1 ist schematisch jeweils eine Flugbahn unter einem Winkel relativ zu einer Radialrichtung dargestellt, wobei ein Winkel α1 der Flugbahn eines durch die Streuschaufel 20' abgeworfenen Partikels und ein Winkel α2 der Flugbahn eines durch die Streuschaufel 20' abgeworfenen Partikels entspricht. Der Sensor S5 erfasst das Partikel aber nicht den Winkel α1 bzw. α2. Dies bedeutet, dass ein von dem Sensor S5 ausgegebenes Sensorsignal keine Information bezüglich eines Auftreffortes P1 bzw. P2 für ein von einer Streuscheibe 3 abgeworfenes Partikel liefern kann und insbesondere die unterschiedlichen Konfiguration der Streuscheibe 3 nicht im Sensorsignal berücksichtigt werden bzw. daraus abgeleitet werden können. Es wird also ein von der Streuscheibe abhängiger Einfluss auf das Streuprofil bei diesen Sensorvorrichtungen nicht berücksichtigt wird.

Die Erfinder haben erkannt, dass zur genauen Bestimmung eines Streuprofils und insbesondere der Streuniere von einer Konfiguration der Streuscheibe 3 abhängt. Es wird daher vorgeschlagen, eine Querverteilung einer Streuvorrichtung mit Sensoren zur Messung verschiedenster Streueigenschaften an der Streuvorrichtung in Abhängigkeit von der verwendeten Streuscheibe einzustellen.

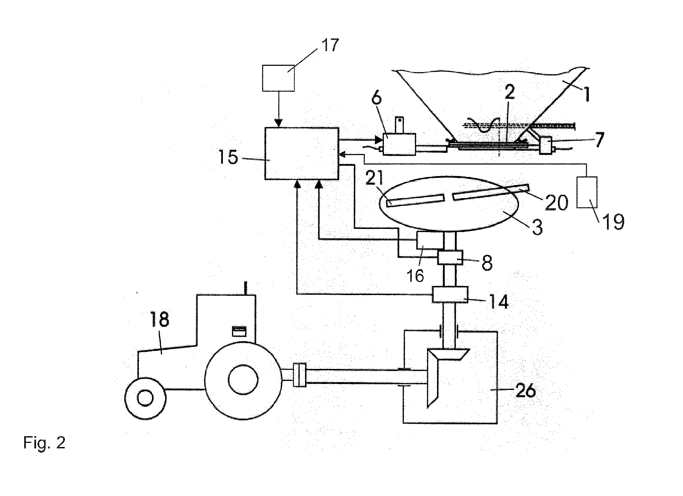

Beispielhafte Ausführungsformen der Erfindung werden im Folgenden mit Bezug auf Fig. 2 im Detail beschrieben.

Fig. 2 stellt schematisch eine Streuvorrichtung zum Ausbringen von Streugut, wie z.B. Düngemittel, dar. Die Streuvorrichtung weist dabei einen Vorratsbehälter 1 mit zumindest einer Dosiervorrichtung 2 auf, über die auszubringendes Streugut in einstellbaren Mengen einer rotierend angetriebenen Streuscheibe 3 zugeführt wird. Obwohl in Fig. 2 nur eine Streuscheibe 3 dargestellt ist, kann die Streuvorrichtung alternativ zwei oder mehr Streuscheiben aufweisen. Die Streuscheibe 3 und die Dosiervorrichtung 2 sind zueinander verstellbar, so dass die Lage des Aufgabepunktes des Streuguts auf die Streuscheibe 3 verändert werden kann. Hierzu sind motorische Einstellmittel 6 zur Einstellung der Dosiervorrichtung 2 und/oder motorische Einstellelemente 7 zur Einstellung des Aufgabepunktes vorgesehen. Weiterhin sind Streuschaufeln 20, 21 auf der Streuscheibe 3 angeordnet, um Streugut auszubringen, das der rotierend angetriebenen Streuscheibe 3 zugeführt wird. Obwohl darstellungsgemäß zwei Streuschaufeln 20, 21 auf der Streuscheibe 3 angeordnet sind, können alternativ eine Streuschaufel oder mehr als zwei Streuschaufeln vorgesehen sein.

Der Antrieb der Streuscheibe 3 erfolgt darstellungsgemäß durch die Zapfwelle eines Traktors 18 über ein Getriebe 26. Alternativ kann die Streuscheibe 3 durch einen Hydraulikmotor (nicht dargestellt) oder über geeignete Einrichtungen angetrieben werden, wie z.B. durch die Hydraulikanlage eines Schleppers oder eine Hydraulikpumpe, die von dem Schlepper oder mit anderen Mitteln motorisch angetrieben wird. Dem Antrieb der Streuscheibe 3 kann in einigen beispielhaften Ausführungsformen eine Regeleinrichtung (nicht dargestellt) zugeordnet sein, mittels der eine Drehzahl der Streuscheibe 3 einstellbar ist.

In der in Fig. 2 dargestellten beispielhaften Ausführungsform ist ferner zur Erfassung eines zum Antrieb der Streuscheibe 3 zugeführtes Drehmoment ein Drehmomentsensor 8 vorgesehen. Darstellungsgemäß ist weiterhin zur Erfassung der Drehzahl der Streuscheibe 3 ein Drehzahlsensor 14 vorgesehen. Optional kann ein Winkelsensor (nicht dargestellt) zur Ermittlung des Drehwinkels der Streuscheibe 3 bereitgestellt werden.

Fig. 2 zeigt eine elektronische Steuervorrichtung 15, die derart konfiguriert ist, dass durch die elektronische Steuervorrichtung 15 eine automatische Steuerung der Streuvorrichtung zum Einstellen eines gewünschten Streubildes durchgeführt wird. Die elektronische Steuervorrichtung 15 ist zur Einstellung einer gewünschten Querverteilung konfiguriert, die z.B. aus einem Speicher abrufbar ist oder durch einen Bediener eingegeben werden kann. Die elektronische Steuervorrichtung 15 führt ferner Regel- und Steuerfunktionen der Streuscheibe 3 und des Dosiersystems 6, 7 aus und ist zur automatischen Überwachung des Streuvorgangs konfiguriert, wie weiter unten ausführlicher beschrieben wird. Weiterhin ist die elektronische Steuervorrichtung 15 zur Regelung und Steuerung des Streuvorgangs vom Schleppersitz aus per Hand bedienbar.

In beispielhaften Ausführungsformen umfasst ein durch die elektronische Steuervorrichtung 15 durchgeführtes automatisches Steuern ein Einstellen von einem der Streuscheibe 3 zugeführten Massenstrom durch Änderung einer Dosierung und/oder einer Drehzahl der Streuscheibe 3 und/oder ein Verstellen von wenigstens einer Streuschaufel 20, 21, um die Orientierung der Streuschaufel 20, 21 mit Bezug auf eine Drehachse der Streuscheibe 3 zu ändern, und/oder einer Aufbringposition des Massenstroms auf die Streuscheibe 3 und/oder einer Zuführrichtung des Massenstroms zur Streuscheibe 3.

In Fig. 2 ist ferner ein Erkennungssensor 16 vorgesehen, der die Streuscheibe 3 erkennt, d.h. mindestens einen die Streuscheibe charakterisierenden Parameter (hierin auch als Streuscheibenparameter bezeichnet) erfasst, wenn die Streuscheibe mit der Streuvorrichtung gekoppelt wird. Ein Streuscheibenparameter ist dabei ein physikalischer und/oder geometrischer Parameter der Streuscheibe, wie zum Beispiel ein Durchmesser, Radius, Flächenmaß einer Oberfläche, auf der die Streuschaufel angeordnet ist, oder Trägheitsmoment der Streuscheibe oder ein das Material der Streuscheibe oder eine Streuschaufel charakterisierender Parameter, z.B. Dichte der Streuschaufel oder Reibungskoeffizient der Streuschaufel oder eine Streuschaufellänge oder eine Anzahl von Streuschaufeln.

In einigen Ausführungsformen ist an der Streuscheibe 3 ein Identifizierungstag angeordnet, das durch den Erkennungssensor 16 erkannt und die im Identifizierungstag enthaltene Information ausgelesen werden kann. Der Erkennungssensor 16 ist z.B. ein optischer oder elektronischer und/oder magnetischer Sensor und/oder Ultraschall- und/oder Radarsensor, der den Identifizierungstag erkennt und die darin enthaltene Information ausliest. Die vom Erkennungssensor 16 ausgelesene Information wird daraufhin zu der elektronischen Steuerungsvorrichtung 15 übertragen, so dass durch den Erkennungssensor 16 mindestens ein Streuscheibenparameter in die elektronische Steuerungsvorrichtung 15 automatisch eingegeben wird. Zusätzlich oder alternativ kann eine Eingabe von mindestens einem Streuscheibenparameter in die elektronische Steuervorrichtung manuell über eine Eingabevorrichtung 17 durchgeführt werden.

In einigen beispielhaften Ausführungsformen überprüft die elektronische Steuervorrichtung 15 die manuell eingegebenen Streuscheibenparameter mit den von dem Erkennungssensor 16 übermittelten Streuscheibenparametern. Auf diese Weise kann eine fälschlicherweise eingesetzte Streuscheibe von der elektronischen Steuervorrichtung 15 automatisch erkannt werden. Daraufhin kann ein Bediener der Streuvorrichtung auf die fälschlicherweise eingesetzte Streuscheibe hingewiesen werden, bspw. kann dem Bediener über ein mit der elektronischen Steuervorrichtung 15 verbundenes Ausgabegerät (nicht dargestellt), z.B. Monitor, ein entsprechender Hinweise ausgegeben werden.

In Fig. 2 ist ferner eine Sensoranordnung 19 dargestellt, die in Umfangsrichtung positionierbar ist, um ein Streuprofil eines durch die Streuscheibe 3 ausgebrachten Massenstroms zu erfassen. Die Sensorvorrichtung 19 ist beispielsweise ähnlich der Sensorvorrichtung 19' aus Fig. 1 ausgebildet. Durch die Sensoranordnung 19 wird ein Streubild, wie eine Streuniere und/oder eine Streubreite, des ausgebrachten Massenstroms erfasst. Gemäß beispielhaften Ausführungsformen der Erfindung weist die Sensoranordnung 19 wenigstens einen optischen Sensor und/oder wenigstens einen Kraftsensor auf. Zusätzlich oder alternativ ist in der Sensoranordnung 19 eine Kamera vorgesehen sein, um anhand der Aufnahmen der Kamera ein Streuprofil zu ermitteln.

Die elektronischen Steuervorrichtung 15 ist über Leitungen (oder alternativ durch andere Übertragungsmittel) mit den einzelnen Sensoren 8, 14, 16 verbunden, so dass die von den Sensoren 8, 14, 16 ausgegebenen Sensorsignale der elektronischen Steuervorrichtung 15 übermittelt werden. Ferner ist die Sensoranordnung 19 mit der elektronischen Steuervorrichtung 15 in Verbindung, so dass die von der Sensoranordnung 19 ausgegebenen Sensorsignale an die elektronische Steuervorrichtung 15 übermittelt werden.

Während des Betriebs der Streuvorrichtung wird durch die elektronischen Steuervorrichtung 15 aufgrund der übermittelten Sensorsignale von mindestens einem der verbundenen Sensoren 8, 14, 16, 19 ein Streuparameter erfasst, der einen aus einem momentanen Drehwinkel der Streuscheibe 3, einer Drehzahl der Streuscheibe 3, einem Abwurfwinkel, einem Abwurfwinkelbereich, einem momentanen Massenstrom, der der von der Streuscheibe 3 ausgebracht wird, einer Orientierung der Streuschaufeln 20, 21, einem Maß für die Dosieröffnung der Dosiervorrichtung umfasst. Die elektronischen Steuervorrichtung 15 ist ferner zur automatischen Einstellung einer gewünschten Querverteilung in Abhängigkeit von dem Streuparameter konfiguriert. Außerdem ermittelt die elektronische Steuervorrichtung 15 eine Querverteilung, Streuprofil und Streuniere während eines Streuvorgangs auf Grundlage der Streuparameter und korrigiert die ermittelte Querverteilung auf Basis des oder der eingegebenen Streuscheibenparameter.

Eine automatische Steuerung wird durch die elektronische Steuervorrichtung 15 auf Basis von dem wenigstens einen eingegebenen Streuscheibenparameter und/oder der ermittelten Streuparameter durchgeführt. Dabei wird ein streuscheibenabhängiger Steuerparameter ermittelt. Zur Ermittlung des Steuerparameters wird z.B. eine Auswertung des wenigstens einen eingegebenen Streuscheibenparameter und/oder der ermittelten Streuparameter anhand von einer oder mehrerer in einem Speicher der elektronischen Steuervorrichtung hinterlegten Beziehungen durchgeführt, auf deren Basis die Steuerparameter ermittelt werden. Eine hinterlegte Beziehung umfasst dabei eine Einstelltabelle oder eine Rechenformel, die Streuscheibenparameter und/oder Streuparameter und Steuerparameter miteinander in Beziehung setzt, oder eine Kennlinie. Falls mehr als eine Beziehung hinterlegt ist wird eine oder werden mehrere davon in Abhängigkeit von dem eingegebenen Streuscheibenparameter und/oder einem ermittelten Streuparameter für die Bestimmung des Steuerparameters automatisch ausgewählt. Die elektronische Steuervorrichtung bestimmt somit einen Steuerparameter auf Grundlage eines eingegeben Streuscheibenparameters und/oder erfassten Streuparameters und steuert die Streuvorrichtung automatisch in Abhängigkeit von dem Steuerparameter.

In beispielhaften Ausführungsformen führt die elektronische Steuervorrichtung 15 auf Grundlage des wenigstens einen eingegebenen Streuscheibenparameters eine Korrektur von erfassten Streuparametern durch. Beispielsweise werden anhand von in der elektronischen Steuervorrichtung hinterlegten Beziehungen, wie etwa Tabellen, Rechenformeln, Zusammenhängen und dergleichen, zu erfassten Streuparametern entsprechende korrigierte Streuparameter ermittelt, auf deren Grundlage eine automatische Steuerung der Streuvorrichtung und Einstellungen an der Streuvorrichtung vorgenommen werden. Beispielsweise kann auf Grundlage von Streuscheibenparametern eine korrigierte Flugbahn ermittelt werden, woraus ein korrigiertes Streubild bestimmt werden kann. Insbesondere beim Wechsel von Streuscheiben wird somit eine genaue Einstellung der Streuvorrichtung erreicht. Auch wird eine automatische Steuerung einer Streuvorrichtung ermöglicht.

Zusammenfassend wird eine automatische Steuerung einer Streuvorrichtung in Abhängigkeit von einer in der Streuvorrichtung verwendeten Streuscheibe vorgeschlagen. Dabei wird davon ausgegangen, dass die in der Streuvorrichtung verwendete Streuscheibe die Grundcharakteristiken einer Streuniere bestimmt, von der aus die weiteren durchzuführenden Einstellungen, insbesondere Einstellungen und Steuerungen während eines Streuvorgangs, festzulegen sind. Prinzipiell wird eine Einstellung und Steuerung der Streuvorrichtung während eines Streuvorgangs dadurch erreicht, dass durch Sensoren verschiedenste Streueigenschaften erfasst werden und die Streuvorrichtung auf Grundlage von Streuscheiben basierten Parametern optimal eingestellt wird, so dass die in der Streuvorrichtung verwendete Streuscheibe bei der Steuerung und Einstellung der Streuvorrichtung berücksichtigt wird. Dies kann beispielsweise durch Nutzung von Parametern der Streuscheibe oder von Werten, die die Streuscheibe charakterisieren, erreicht werden, wobei geeignete Funktionen, Tabellen. Zusammenhänge, Formeln und dergleichen auf Grundlage der Streuscheiben basierten Parameter ausgewählt werden, um aus Messungen am Streuer, wie z.B. hinsichtlich des Streuregensektors, des Abwurfwinkels, der Geschwindigkeit, die Streuvorrichtung und insbesondere die Streuscheibe automatisch einzustellen. In den vorangehend beschriebenen Ausführungsformen ist daher die Streuscheibe ein wichtiger Parameter zur Charakterisierung des Streubilds. Unter Berücksichtigung der Streuscheibe, wie vorangehend beschrieben, wird demzufolge eine hohe Genauigkeit in der Einstellung der Streuniere und eine automatische Einstellung und Steuerung der Streuvorrichtung erreicht, ohne aufwendige Berechnungen und Messungen zu erfordern.

Wie hinsichtlich Fig. 1 oben beschrieben, können zur Erfassung eines abgeworfenen Massenstroms verwendete Sensoren lediglich das Vorhandensein von Partikeln erfassen, nicht jedoch unter welchem Winkel die Partikel bezüglich der Sensoren abgeworfen werden. Demzufolge enthält die entsprechend erfasste Information über die Menge an Partikeln, aus der ein Streuprofil in einem Abwurfwinkelbereich ermittelt wird, nicht die exakte Information über den Ort, an dem die abgeworfenen Partikel zum Liegen kommen. Es wird also die für eine Ermittlung der Streuniere wichtige Winkelinformation nicht erfasst. Mit Änderung der Streuscheibe, insbesondere mit Änderung des Scheibendurchmessers bzw. der Wurfschaufellänge, ändert sich der Winkel, unter dem Partikel abgeworfen werden. Bei Verwendung gleicher Auswertungs- und Ermittlungsverfahren für unterschiedliche Streuscheiben taucht daher ein Fehler in der Bestimmung von Streuparametern auf, so dass insbesondere die Streuniere und ein Streuprofil fehlerhaft ermittelt werden.

Indem die Einflüsse unterschiedlicher Streuscheiben berücksichtigt werden und die Auswertung daraufhin abgestellt wird eine sehr genaue Bestimmung des Streubilds ermöglicht, die für eine optimale Einstellung und Steuerung von Streuvorrichtungen wichtig ist. Damit kann eine automatische Steuerung einer Streuvorrichtung und insbesondere die automatische Einstellung einer gewünschten Querverteilung ohne großen Aufwand erreicht werden. Beispielsweise können empirisch ermittelte Einflüsse unterschiedlicher Scheibenparameter erfasst und dann zur Korrektur von Sensorsignalen verwendet werden, um Abwurfwinkel, Abwurfrichtung, Abwurfwinkelbereich, Streuniere, Streuprofil und dergleichen zu korrigieren.

Es wird also in verschiedenen Aspekten eine Streuvorrichtung mit Streuscheibe und ein Verfahren zum Einstellen einer Querverteilung eines durch eine Streuvorrichtung ausgebrachten Massenstroms bereitgestellt, wobei die Streuscheibe als eine das Streubild beeinflussende Größe in einer automatischen Steuerung der Streuvorrichtung zur Einstellung einer gewünschten Querverteilung berücksichtigt wird. In den vorangehend beschriebenen Ausführungsformen wird wenigstens ein geometrischer und/oder physikalischer Streuscheibenparameter in eine elektrische Steuervorrichtung der Streuvorrichtung eingegeben und die Streuvorrichtung in Abhängigkeit von dem eingegebenen Streuscheibenparameter automatisch gesteuert, um eine gewünschte Querverteilung festzulegen.

## Patentansprüche

1. Verfahren zum Einstellen einer Querverteilung eines durch eine Streuvorrichtung mittels einer Streuscheibe (3) ausgebrachten Massenstroms, umfassend:
Eingeben von wenigstens einem geometrischen und/oder physikalischen Streuscheibenparameter in eine elektronische Steuervorrichtung (15) der Streuvorrichtung; und
automatisches Steuern der Streuvorrichtung in Abhängigkeit von dem eingegebenen Streuscheibenparameter, um eine gewünschte Querverteilung festzulegen.

2. Verfahren nach Anspruch 1, wobei das automatische Steuern der Streuvorrichtung ein automatisches Bestimmen eines Steuerparameters auf Grundlage des eingegebenen Streuscheibenparameters und ein Steuern der Streuvorrichtung in Abhängigkeit von dem Steuerparameter umfasst.

3. Verfahren nach Anspruch 2, wobei der Steuerparameter aus dem Streuscheibenparameter auf Grundlage von wenigstens einer in einem elektronischen Speicher hinterlegten Beziehung bestimmt wird.

4. Verfahren nach Anspruch 3, wobei die wenigstens eine hinterlegte Beziehung wenigstens eine Einstelltabelle und/oder wenigstens eine Rechenformel, die den wenigstens einen eingegebenen Streuscheibenparameter mit dem wenigstens einen Steuerparameter in Beziehung setzt, und/oder wenigstens eine Kennlinie umfasst

5. Verfahren nach Anspruch 3 oder 4, wobei eine Mehrzahl von Beziehungen hinterlegt ist und eine davon in Abhängigkeit von dem eingegebenen Streuscheibenparameter für die Bestimmung des Steuerparameters automatisch ausgewählt wird.

6. Verfahren nach einem der Ansprüche 1 bis 5, ferner umfassend ein Durchführen von Messungen während eines Streuvorgangs mittels einer Sensorvorrichtung, um während des Streuvorgangs wenigstens einen Streuparameter zu erfassen, wobei das automatische Steuern der Streuvorrichtung während des Streuvorgangs ein automatisches Einstellen der Querverteilung in Abhängigkeit von dem wenigstens einen Streuparameter umfasst.

7. Verfahren nach Anspruch 6, ferner umfassend ein Ermitteln einer Querverteilung des ausgebrachten Massenstroms anhand des wenigstens einen Streuparameters und ein Ermitteln einer korrigierten Querverteilung in Abhängigkeit von dem wenigstens einen eingegebenen Streuscheibenparameter.

8. Verfahren nach einem der Ansprüche 1 bis 7, wobei das automatische Steuern der Streuvorrichtung ein Einstellen eines der Streuscheibe (3) zugeführten Massenstroms und/oder einer Drehzahl der Streuscheibe (3) und/oder ein Verstellen einer Streuschaufel(20, 21) und/oder einer Aufbringposition des Massenstroms auf die Streuscheibe (3) und/oder einer Zuführrichtung des Massenstroms zu Streuscheibe (3) umfasst.

9. Verfahren nach einem der Ansprüche 1 bis 8, wobei der wenigstens eine eingegebene Streuscheibenparameter einen Scheibendurchmesser und/oder eine Streuschaufellänge und/oder ein Trägheitsmoment der Streuscheibe (3) und/oder eine Schaufelposition auf der Streuscheibe (3) und/oder eine Schaufelorientierung auf der Streuscheibe (3) umfasst.

10. Streuvorrichtung mit einer Streuscheibe (3) und einer elektronischen Steuervorrichtung (15), die zur Durchführung des Verfahrens nach einem der Ansprüche 1 bis 9 konfiguriert ist.
